# FASCICULE DE BREVET EUROPEEN

(11) **EP 1 531 589 B1**
(45) Date de publication et mention de la délivrance du brevet: **13.04.2011**
(21) Numéro de dépôt: 04291339.2
(22) Date de dépôt: 28.05.2004
(51) Int. Cl.: H04L 12/56

(54) **Système et procédé de transmission d'une séquence de messages dans un réseau d'interconnexions**
System und Verfahren zur Übertragung von einer Nachrichtenreihenfolge in einem Verbindungsnetzwerk
System and method for transmission of a message sequence in an interconnection network

(30) Priorité: 13.11.2003 FR 0313298
(43) Date de publication de la demande: 18.05.2005
(73) Titulaire: Arteris, 75008 Paris (FR)
(72) Inventeur: Douady, César, 91400 Orsay (FR); Boucard, Philippe, 78150 Le Chesnay (FR)
(74) Mandataire: Casalonga, Axel

(56) Documents cités:
- EP-A- 1 061 695
- US-A1- 2002 087 766

## Description

La présente invention concerne un procédé et un dispositif de transmission d'une séquence de messages dans un réseau d'interconnexions point à point.

Les réseaux d'interconnexions sont des moyens de transmission de messages entre différents agents électroniques ou informatiques, ou entités communicantes. Une transmission peut être faite sans effectuer de traitement du message, ou bien en effectuant un traitement du message. On parle dans tous les cas de transmission de messages. On entend par traitement d'un message, par exemple une analyse de données contenues dans le message, ou bien un ajout de données au message.

Un message est, bien entendu, une suite de données informatiques, c'est-à-dire une suite de bits ou d'octets agencés avec une sémantique spécifique, et représentant une information atomique complète. Chaque message comprend un en-tête de message qui comprend principalement l'adresse de destination du message et la taille du message.

Ces réseaux d'interconnexions sont généralement composés de deux parties distinctes qui interagissent, à savoir une partie matérielle comprenant des liens physiques et un contrôleur de réseaux, câblé ou micro programmé, qui exécute un protocole de bas niveau, et une partie logicielle pour effectuer l'interface avec des fonctions logicielles de plus haut niveau.

Un réseau d'interconnexions idéal serait certainement un réseau totalement interconnecté, c'est-à-dire un réseau dans lequel chaque paire d'agents est connectée par une liaison point à point. Cela est cependant irréaliste, car trop compliqué dès que l'on dépasse quelques dizaines d'agents. Il est donc souhaitable que le réseau d'interconnexions puisse assurer l'ensemble des communications entre agents avec un nombre limité de liens par agent.

Il existe des agents spécialisés pour effectuer un routage ou aiguillage ou transmission des messages circulant sur le réseau d'interconnexions.

Dans un réseau d'interconnexions point à point, une entrée d'un agent est reliée à au plus un agent initiateur de messages, ou à au plus un agent de transmission de messages.

Les réseaux d'interconnexions comprennent des dispositifs de transmission ou routeurs ("switch" en langue anglaise), une organisation du réseau assurant le lien entre les routeurs et les autres agents, et un ensemble de routage qui assure la circulation des messages au sein de l'organisation du réseau.

Un routeur est un agent actif du réseau d'interconnexions qui reçoit en entrée des messages venant d'un ou plusieurs agents et qui achemine ou route chacun de ces messages respectivement vers leur agent de destination ou vers un autre routeur. Ce routage est effectué au moyen de l'adresse de l'agent destinataire du message, ou agent cible, qui est présente dans l'en-tête du message à router.

L'organisation d'un réseau constitue la structure physique reliant les différents noeuds ou points de connexions d'un réseau d'interconnexions.

L'ensemble de routage gère la manière dont est routé, ou acheminé, un message depuis un agent source émettant le message jusqu'à un agent destinataire du message à travers des routeurs en empruntant un chemin de routage.

Tout agent présent dans un réseau d'interconnexions peut émettre et/ou recevoir des messages. La technique de routage détermine la manière dont les messages sont transmis depuis l'agent émetteur, qui crée le message, vers l'agent destinataire ou agent cible. Pour un réseau d'interconnexions donné, il existe différentes techniques de routage, pour lesquelles les objectifs sont de réduire la latence de fin de message, ou délai d'acheminement de fin de message, d'un message, depuis l'agent émetteur jusqu'à l'agent destinataire, d'augmenter le débit global, et d'améliorer la fiabilité globale du réseau. La latence inclut tous les temps d'attente dus à la manière dont se propagent les messages dans le réseau et plus particulièrement à travers les dispositifs de transmission de messages ayant la charge de router les messages. Le débit est la quantité de données informatiques qu'un lien du réseau peut transporter par unité de temps, et peut être mesuré localement sur un lien du réseau d'interconnexions ou globalement sur l'ensemble du réseau d'interconnexions. La fiabilité d'un réseau est importante, car la probabilité d'erreurs croit rapidement avec le nombre de noeuds dans un réseau d'interconnexions.

Un agent de transmission comprend au moins une entrée comprenant un moyen de mémorisation organisé en file de messages de type premier entré premier sorti ou FIFO ("First In First Out" en langue anglaise) et au moins une sortie comprenant un moyen de transmission de message apte à décider du message à transmettre. Seuls les premiers messages des files des entrées sont visibles pour l'agent de transmission.

De nombreuses applications logicielles nécessitent d'accéder à des données identiques. Par exemple, il ne faut pas que lorsqu'une application modifie une donnée, et qu'une autre application, ou la même application nécessite un accès à la valeur modifiée de la donnée, qu'elle y accède avant la fin de sa modification. Pour cela, des solutions ont été développées et sont généralement basées sur le concept d'ensemble atomique d'actions, ou d'ensemble d'actions insécables, en d'autres termes, une série d'actions ne pouvant être interrompu par d'autres actions.

Une transaction atomique de type lecture-modification-écriture ("read-modify-write" en langue anglaise) est une séquence insécable constituée d'une étape de lecture de données à une adresse particulière d'un agent cible, suivie d'une étape d'actions modifiant les données, puis d'une écriture à l'adresse initiale des nouvelles valeurs des données modifiées. Ces transactions particulières interdisent des modifications en parallèle sur une même donnée. C'est la partie matérielle ("hardware" en langue anglaise) du système qui gère directement ce type de transactions. Des transactions atomiques courantes de ce type sont généralement des incréments, des décréments, des initialisations, ou des effacements.

Il existe également des transactions effectuées sur des bus de données verrouillés ("locked bus" en langue anglaise), et basées sur l'utilisation d'un signal de verrouillage du bus. Ce signal de verrouillage agit directement sur le moyen de transmission ou de commutation, ou arbitre, du bus de données, de manière à ce que tant que le signal de verrouillage est valide, seul l'agent émetteur de ce message de verrouillage peut émettre des messages sur le bus de données et agir sur des données, ce qui garantit l'atomicité du traitement en cours. Lorsque le bus est verrouillé, seuls des messages arrivant sur l'entrée relié à l'agent initiateur peuvent être transmis sur la sortie permettant de transmettre les messages à destination de l'agent destinataire.

Le document US 2002/087766 montre une méthode de transactions sur un bus de données verrouillé. La transaction ne s'effectue qu'après la réception des confirmations de verrouillage de chaque noeud.

Dans un réseau d'interconnexion, on ne peut pas garantir, par construction, l'atomicité d'une transaction complète, car un agent de transmission peut entrelacer des messages venant de plusieurs agents initiateurs et à destination d'un même agent destinataire, rompant ainsi l'atomicité de la première transaction en cours de commutation ou transmission ou routage.

Aussi, au vu de ce qui précède, l'invention a pour but de garantir l'atomicité ou non interruption d'une séquence de messages originaire d'un agent émetteur et à destination d'un agent cible. En d'autres termes, il s'agit de transmettre une séquence insécable de messages, d'un agent initiateur à un agent destinataire, en ne verrouillant qu'une sortie sur une entrée pour les agents de transmissions situés sur le trajet des messages de la séquence insécable.

Ainsi, selon un aspect de l'invention, il est proposé un procédé de transmission d'une séquence de messages, dans un réseau d'interconnexions point à point comprenant des agents initiateurs de messages, des agents destinataires de messages, et des agents de transmission de messages. Lors d'une transmission d'une séquence insécable de messages d'un agent initiateur à un agent destinataire, on verrouille une sortie d'un agent de transmission de messages sur une entrée de l'agent de transmission. Les autres entrées dudit agent de transmission peuvent transmettre des messages aux autres sorties dudit agent de transmission.

En d'autres termes, on transmet, momentanément, uniquement les messages arrivant sur une entrée déterminée, en provenance d'un agent initiateur à une sortie déterminée, ce qui constitue un verrouillage d'une sortie sur une entrée.

Dans un premier mode de mise en oeuvre préféré, une séquence insécable de messages générée par un agent initiateur et destinée à un agent destinataire, débute par un message de verrouillage comprenant une adresse identifiant l'agent destinataire, et un code d'opération possédant l'information que la séquence est insécable.

Par exemple, ledit code d'opération s'interprétant comme un verrouillage s'interprète en outre comme une commande.

Cela permet d'optimiser l'utilisation de bande passante.

Dans un mode de mise en oeuvre avantageux, le message de verrouillage propage, aux agents de transmission successifs entre l'agent initiateur et l'agent destinataire, un verrouillage d'une sortie déterminée de chacun desdits agents de transmission successifs, sur l'entrée par laquelle est arrivé le message de verrouillage.

En outre, les messages de ladite séquence insécable de messages suivant le message de verrouillage sont transmis par les agents de transmission successifs par un trajet alors verrouillé, un message provenant d'un autre agent initiateur ne pouvant être intercalé dans ladite séquence insécable de messages.

Dans un mode de mise en oeuvre avantageux, ladite séquence insécable de messages se termine par un message de déverrouillage comprenant une adresse identifiant l'agent destinataire, et un code d'opération s'interprétant comme un déverrouillage.

Dans un mode de mise en oeuvre préféré, le message de déverrouillage propage, aux agents de transmission successifs entre l'agent initiateur et l'agent destinataire, un déverrouillage des sorties successives verrouillées sur leur entrée respective.

En outre, ledit code d'opération s'interprétant comme un déverrouillage s'interprète comme une commande.

En outre, ledit message de verrouillage comprend en outre le nombre de messages de la séquence insécable de messages.

Dans ce cas, il est inutile de terminer la séquence insécable de messages par un message de déverrouillage.

Dans un second mode de mise en oeuvre préféré, chaque message d'une séquence insécable de messages générée par un agent initiateur et destinée à un agent destinataire comprend une information indiquant s'il est lié de manière insécable avec le message suivant, le premier message de ladite séquence comprenant en outre une adresse identifiant l'agent destinataire.

En outre, on verrouille, sur les agents de transmission successifs entre l'agent initiateur et l'agent destinataire, une sortie déterminée de chacun desdits agents de transmission successifs, sur l'entrée par laquelle est arrivé le premier message de la séquence insécable comprenant une information indiquant qu'il est lié de manière insécable avec le message suivant. On transmet, par le chemin verrouillé, les messages suivants de la séquence insécable, et on déverrouille lesdites sorties verrouillées à la transmission du dernier message de la séquence insécable, qui contient une information indiquant qu'il n'est pas lié de manière insécable avec le message suivant.

Selon un autre aspect de l'invention, il est également proposé un système de transmission d'une séquence de messages dans un réseau d'interconnexions point à point comprenant des agents initiateurs de messages, des agents destinataires de messages, et des agents de transmission de messages. Le système comprend un agent de transmission qui comprend au moins une sortie comprenant un moyen d'autorisation apte à verrouiller ladite sortie sur une entrée de l'agent de transmission. Les autres entrées dudit agent de transmission peuvent transmettre des messages aux autres sorties dudit agent de transmission. Le moyen d'autorisation est en outre apte à déverrouiller ladite sortie verrouillée.

D'autres buts, caractéristiques et avantages de l'invention apparaîtront à la lecture de la description suivante, donnée à titre d'exemple non limitatif, et faite en référence aux dessins annexés sur lesquels :
- la figure 1 est un schéma synoptique d'un mode de réalisation d'un système selon l'invention; et
- les figures 2 à 11 illustrent les étapes d'un procédé selon l'invention mis en oeuvre par un système selon la figure 1.

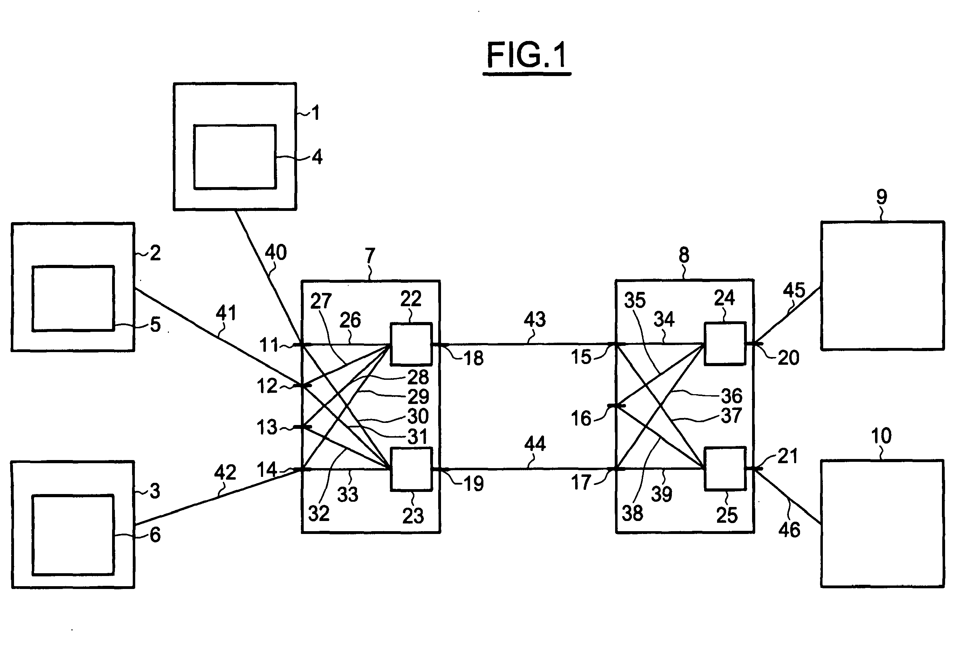

La figure 1 représente un système d'interconnexions qui comprend trois agents initiateurs de messages 1, 2, 3, comprenant respectivement un moyen de création 4, 5, 6 apte à générer une séquence de messages, insécable ou non. Un agent initiateur est par exemple une unité centrale de traitement (CPU), ou une interface externe. Le système comprend en outre deux agents de transmission ou routeurs 7, 8, et deux agents destinataires 9 et 10. Un agent destinataire est, par exemple, un écran vidéo (LCD), ou une mémoire vive dynamique synchrone (SDRAM). Le nombre de chacun de ces agents est bien évidemment quelconque.

Dans cet exemple, l'agent de transmission 7 comprend quatre entrées 11, 12, 13, 14, et l'agent de transmission 8 comprend trois entrées 15, 16, 17. Chaque entrée d'un agent d'un système d'interconnexions point à point est reliée à au plus un autre agent du système d'interconnexions point à point. L'agent de connexion 7 comprend en outre deux sorties 18 et 19, et l'agent de transmission 8 comprend deux sorties 20 et 21. Dans cet exemple, chaque sortie 18, 19, 20, 21, des agents de transmission 7, 8 comprend respectivement un module d'autorisation 22, 23, 24, 25 apte à verrouiller une sortie de l'agent respectif sur une entrée de l'agent respectif. On entend par verrouiller une sortie sur une entrée, le fait de n'autoriser à être transmis sur une sortie que des messages arrivant sur une entrée. Ce verrouillage permet de transmettre une séquence insécable de messages d'un agent initiateur à un agent destinataire. Bien entendu quand une sortie est déverrouillée, ou non verrouillée, sur une entrée, le comportement de transmission est un comportement classique. Les sorties 18, 19, 20, 21 des agents de transmission 7, 8, sont connectées à au moins une des entrées de leur agent de transmission respectif. La sortie 18 de l'agent de transmission 7 est respectivement reliée par au moins une des connexions 26, 27, 28, 29 aux entrées 11, 12, 13, 14, et la sortie 19 de l'agent de transmission 7 est respectivement reliée par au moins une des connexions 30, 31, 32 , 33 aux entrées 11, 12, 13, 14. De même, dans cet exemple, la sortie 20 de l'agent de transmission 8 est respectivement reliée par au moins une des connexions 34, 35, 36, aux entrées 15, 16, 17, et la sortie 21 de l'agent de transmission 8 est respectivement reliée par au moins une des connexions 37, 38, 39, aux entrées 15, 16, 17.

L'agent initiateur 1 est relié à l'entrée 11 de l'agent de transmission 7 par une connexion 40, l'agent initiateur 2 est relié à l'entrée 12 de l'agent de transmission 7 par une connexion 41, et l'agent initiateur 3 est relié à l'entrée 14 de l'agent de transmission 7 par une connexion 42.

En outre, les sorties 18 et 19 de l'agent de transmission 7 sont respectivement reliées aux entrées 15 et 17 de l'agent de transmission 8 par des connexions 43 et 44 ayant des capacités de mémorisation. Les sorties 20 et 21 de l'agent de transmission 8 sont respectivement reliées aux agents destinataires 9 et 10 par des connexions 45 et 46 ayant des capacités de mémorisation.

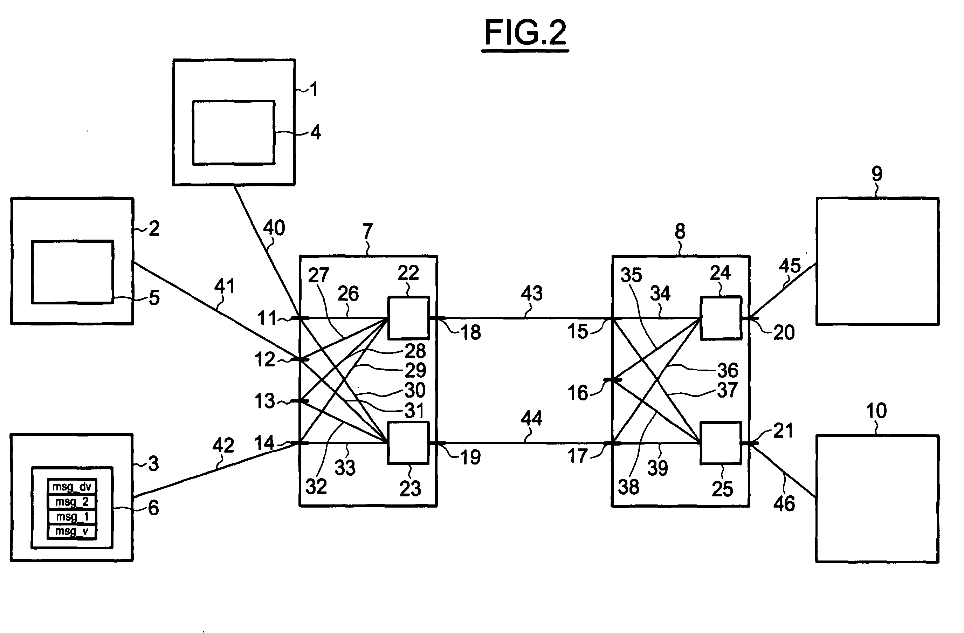

Les figures 2 à 11 illustrent le fonctionnement du procédé selon l'invention, mis en oeuvre par un système selon la figure 1.

La figure 2 décrit une séquence insécable de messages crée et mémorisée par le moyen de création 6 de l'agent initiateur 3, par exemple comprenant 4 messages : un message de verrouillage msg_v, suivi de deux messages de commandes msg_1 et msg_2, suivi d'un message de déverrouillage msg_dv. Cette séquence insécable de messages est par exemple destinée à l'agent destinataire 10. Le message de verrouillage msg_v comprend une adresse identifiant l'agent destinataire 10, et un code d'opération possédant l'information que la séquence est insécable. Le message de déverrouillage comprend un code d'opération s'interprétant comme un déverrouillage.

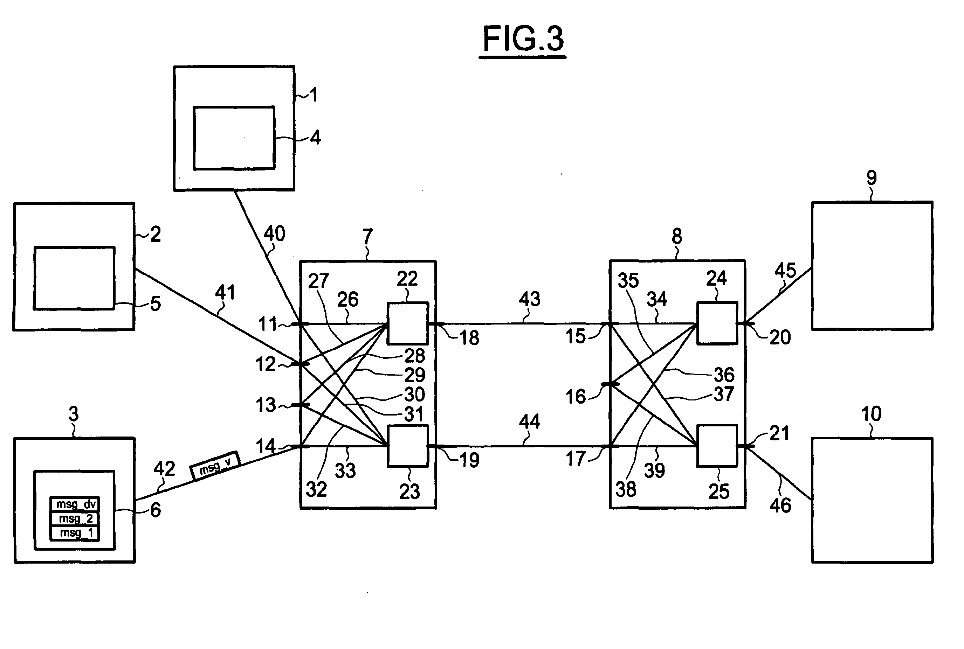

Sur la figure 3, on transmet le message de verrouillage msg_v par la connexion 42 à l'entrée 14 de l'agent de transmission 7.

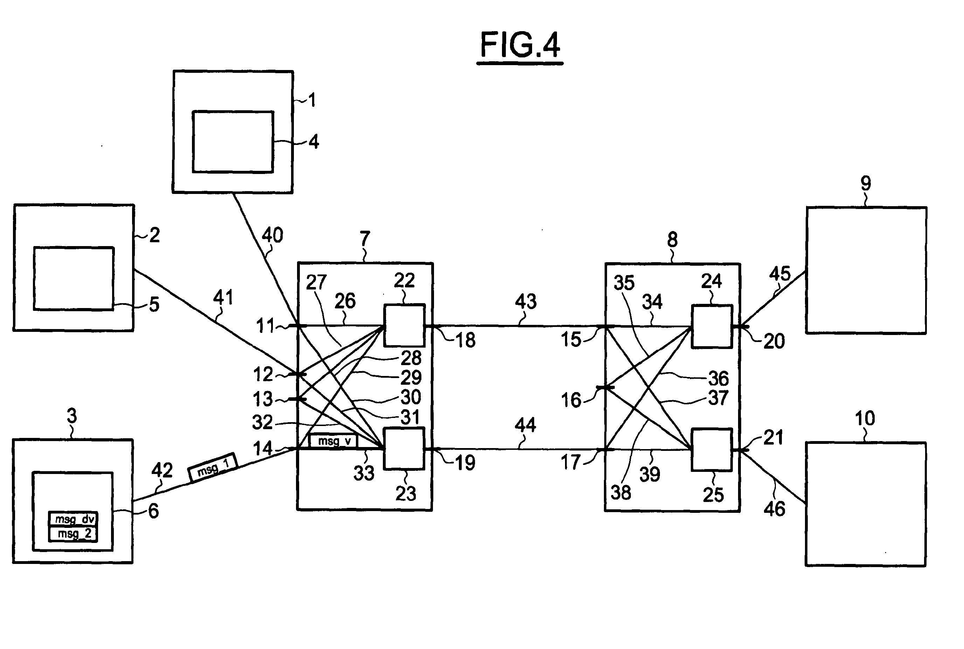

Sur la figure 4, le module d'autorisation 23 a sélectionné le message de verrouillage msg_v pour la connexion 33 allant à la sortie 19. Le module d'autorisation 23 reconnaît le code d'opération de verrouillage et verrouille alors la connexion 33 pour la sortie 19, ou, en d'autres termes, verrouille la sortie 19 sur l'entrée 14. Seuls des messages arrivant à l'entrée 14, en d'autres termes seuls des messages provenant de l'agent initiateur 3, pourront être transmis à la sortie 19 du moyen de transmission 7. La connexion 33, seule autorisée à transmettre des messages à la sortie 19, est alors représentée par un trait épaissi, signifiant que la sortie 19 est verrouillée sur l'entrée 14. De plus, le premier message de commande msg_1 est transmis par la connexion 42.

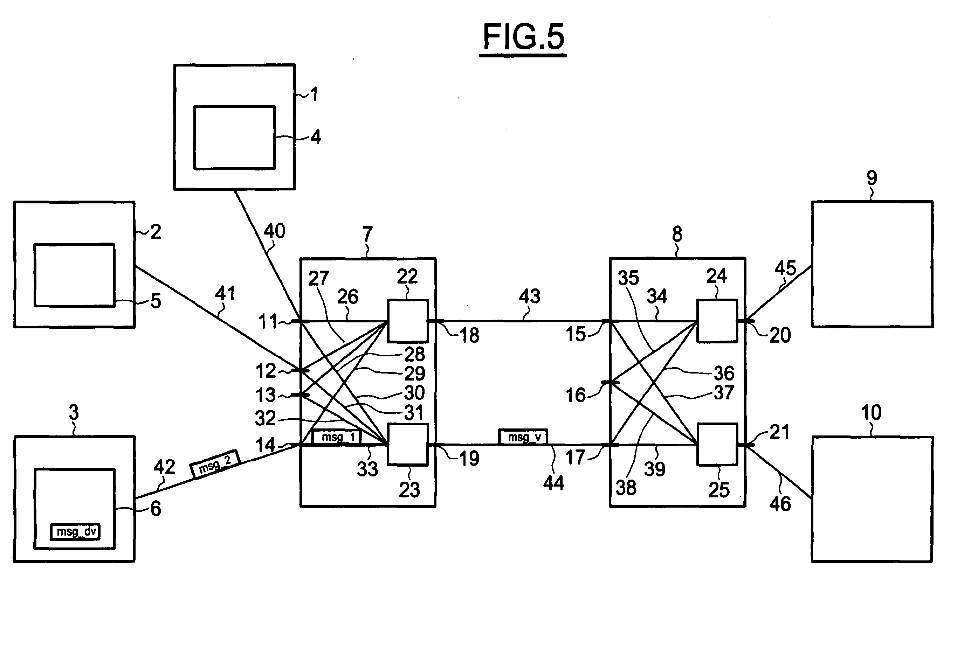

Sur la figure 5, le message de verrouillage msg_v continue sa transmission à destination de l'agent destinataire 10 par la connexion 44, et arrive à l'entrée 17 de l'agent de transmission 8. La connexion 33 est toujours la seule autorisée à transmettre des messages à la sortie 19, et transmet d'ailleurs le premier message de commande msg_1. En d'autres termes, la sortie 19 reste verrouillée sur l'entrée 14 de l'agent de transmission 7. En outre, le second message de commande msg_2 est transmis par la connexion 42 à l'entrée 14 de l'agent de transmission 7, et le premier message de commande est transmis par la connexion 33 à la sortie 19 de l'agent de transmission 7.

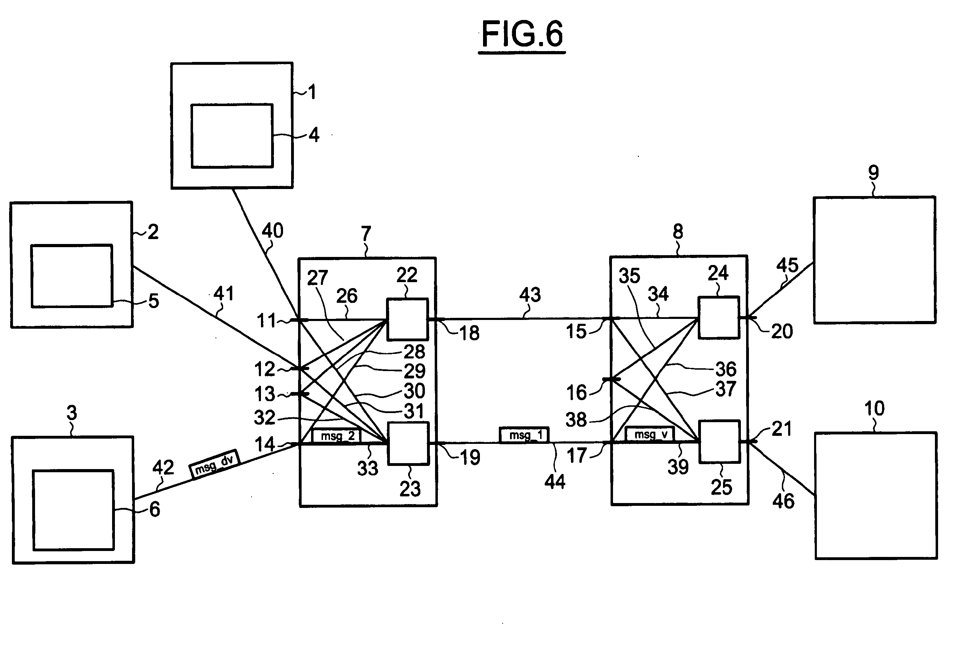

Sur la figure 6, le module d'autorisation 25 sélectionne le message de verrouillage msg_v pour la connexion 39 allant de l'entrée 17 à la sortie 21 de l'agent de transmission 8. Le module d'autorisation 25 reconnaît le code d'opération de verrouillage, et verrouille la sortie 21 sur l'entrée 17. Seuls des messages arrivant à l'entrée 17, en d'autres termes, seuls des messages provenant de la sortie 19 de l'agent de transmission 7, donc de l'entrée 14, donc de l'agent initiateur 3, pourront être transmis à la sortie 21 du moyen de transmission 8. La connexion 39, seule autorisée à transmettre des messages à la sortie 21, est alors représentée par un trait épaissi, signifiant que la sortie 21 est verrouillée sur l'entrée 17. La sortie 19 est verrouillée sur l'entrée 14 et la connexion 33 est la seule autorisée à transmettre des messages à la sortie 19. D'ailleurs, la connexion 33 transmet le second message de commande msg_2 à la sortie 19. De plus, le premier message de commande msg_1 est transmis par la connexion 44, et le message de déverrouillage msg_dv est transmis par la connexion 42 à l'entrée 14 de l'agent de transmission 7.

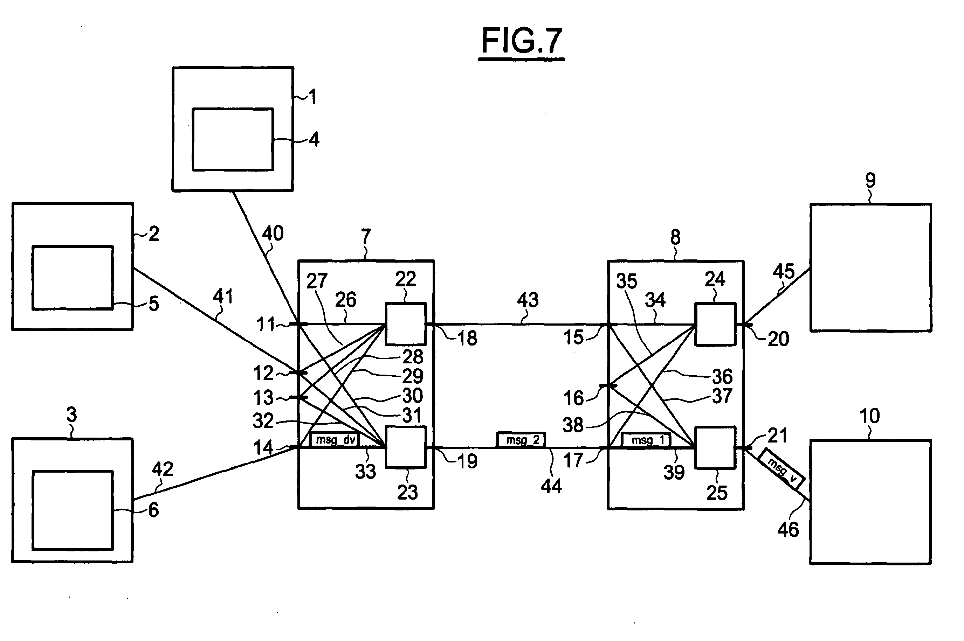

Sur la figure 7, le module d'autorisation 23 reconnaît le code d'opération de déverrouillage du message de déverrouillage msg_dv, et met alors fin au verrouillage de la sortie 19 sur l'entrée 14. L'entrée 14 et la sortie 19 retrouvent alors un fonctionnement classique. La sortie 21 est verrouillée sur l'entrée 17, et transmet le premier message de commande msg_1. En outre, le second message de commande msg_2 est transmis par la connexion 44, et le message de verrouillage msg_v est transmis par la connexion 46 à l'agent destinataire 10.

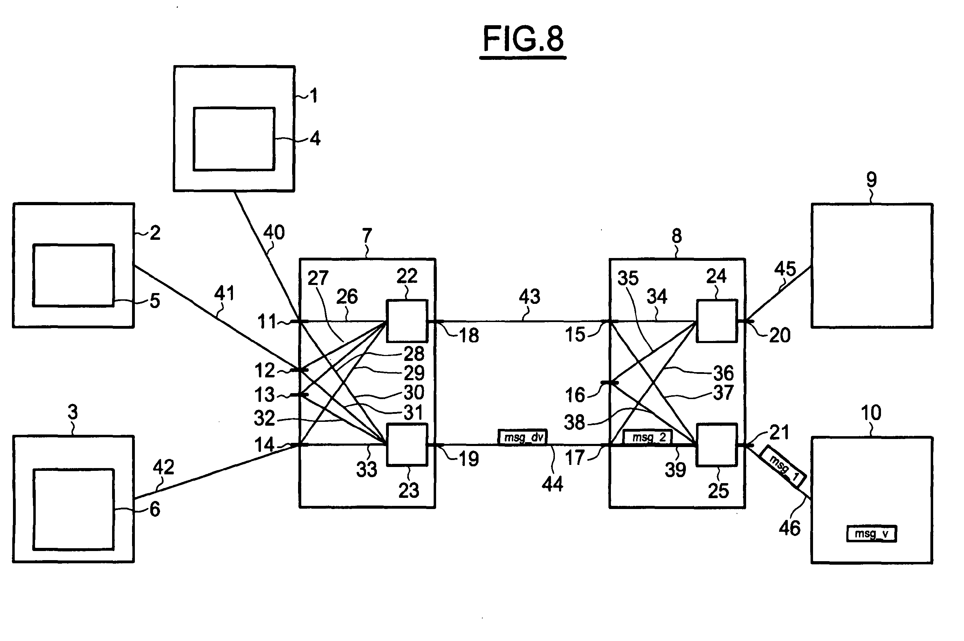

Sur la figure 8, le message de verrouillage est reçu par l'agent destinataire 10, le premier message de commande msg_1 est transmis par la connexion 46, le second message de commande msg_2 est transmis par la connexion 39 à la sortie 21, et le message de déverrouillage msg_dv est transmis par la connexion 44. La connexion 39 est à nouveau représentée en trait fin, car la sortie 19 n'est plus verrouillée sur l'entrée 14.

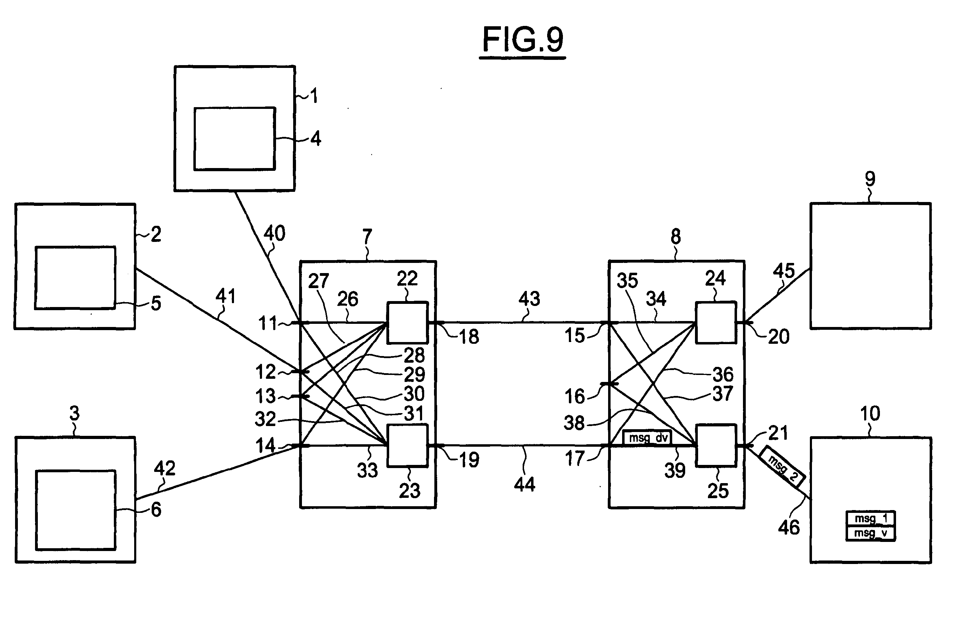

Sur la figure 9, l'agent destinataire 10 a reçu le premier message de commande msg_1, et le second message de commande msg_2 est transmis par la connexion 46. Le message de déverrouillage msg_dv est transmis par la connexion 39. Le module d'autorisation 25 reconnaît le code d'opération de déverrouillage du message de déverrouillage msg_dv, et met alors fin au verrouillage de la sortie 21 sur l'entrée 17.

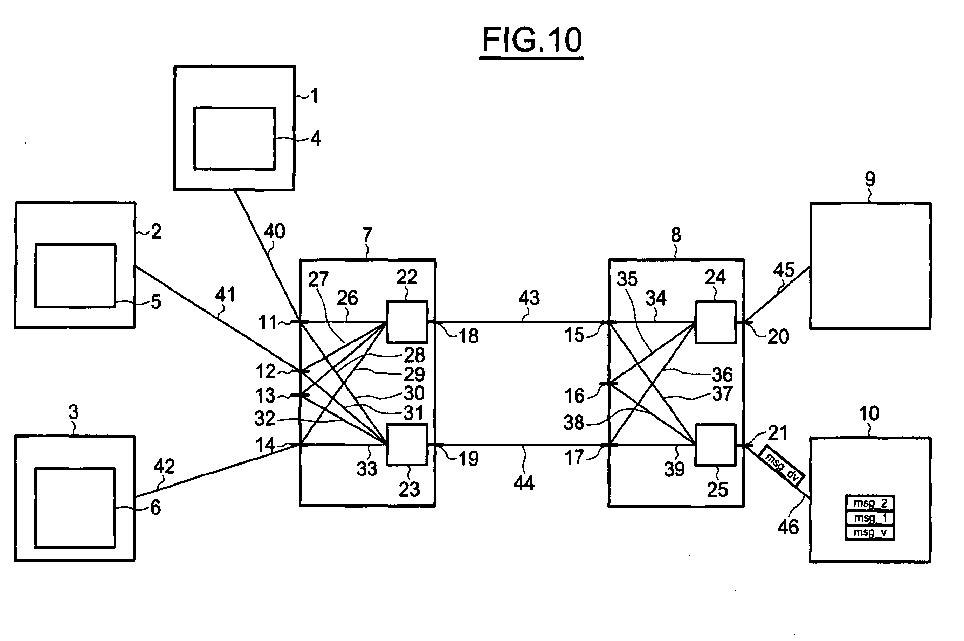

Sur la figure 10, l'agent destinataire 10 a également reçu le second message de commande msg_2, et le message de déverrouillage msg_dv est transmis par la connexion 46.

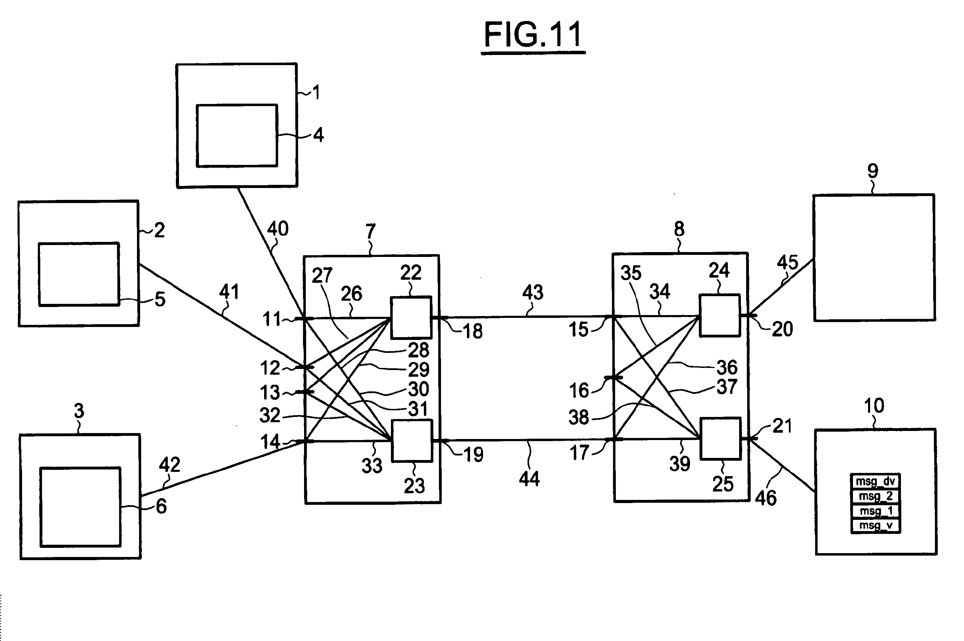

Enfin, la figure 11 représente la fin de cet exemple de transmission d'une séquence atomique, ou à accès exclusif, l'agent destinataire 10 ayant reçu le message de fin d'autorisation exclusive msg_dv, et donc toute ladite séquence. La connexion 39 est à nouveau représentée en trait fin, car la sortie 21 n'est plus verrouillée sur l'entrée 17.

La transmission de la séquence insécable a bien été effectuée sans qu'un autre message ne puisse s'intercaler dans ladite séquence reçue par l'agent cible 10.

Afin d'optimiser l'utilisation de la bande passante, les codes d'opération des messages de verrouillage et de déverrouillage peuvent respectivement faire partie d'une commande.

Il est également possible, dans un autre mode de réalisation, de ne pas mettre de message de déverrouillage msg_dv en fin d'une séquence insécable de messages, mais d'ajouter, dans le message de verrouillage msg_v de la séquence insécable, le nombre de messages de la séquence insécable de messages. Les moyens d'autorisation du système sont alors aptes à gérer le nombre de messages de la séquence insécable restant à transférer.

Un autre mode de mise en oeuvre de l'invention est de ne pas créer une séquence insécable de messages débutant par un message de verrouillage, ni se terminant par un message de déverrouillage, mais de mettre dans chaque message de la séquence insécable, une information, par exemple un bit, indiquant si le message est lié ou non, de manière insécable, au message suivant. Le verrouillage d'une sortie d'un agent de transmission s'effectuera alors quand un message indiquant qu'il est lié de manière insécable au message suivant arrive à cet agent de transmission et est détecté par le module d'autorisation d'une sortie de l'agent de transmission. Le déverrouillage de cette sortie sur cette entrée s'effectue dès que le dernier message de la séquence insécable est détecté par le module d'autorisation de la sortie, le dernier message d'une séquence insécable de messages indiquant qu'il n'est pas lié de manière insécable au message suivant.

L'invention permet donc de gérer, à faible coût, la transmission de séquences insécables de messages, d'un agent initiateur à un agent destinataire en verrouillant des sorties sur une des entrées des agents de transmissions successifs entre l'agent initiateur et l'agent destinataire, sans modifier le comportement des autres entrées et sortie de ces agents de transmission.

L'invention offre un avantage des bus de données verrouillables, c'est-à-dire dont les transactions ou séquences insécables de messages sont verrouillées, sans en avoir l'inconvénient qui est de bloquer le fonctionnement des entrées et sorties non verrouillées.

## Revendications

1. Procédé de transmission d'une séquence de messages, dans un réseau d'interconnexions point à point comprenant des agents (1, 2, 3) initiateurs de messages, des agents (9, 10) destinataires de messages, et des agents (7, 8) de transmission de messages, dans lequel, lors d'une transmission d'une séquence insécable de messages d'un agent initiateur (3) à un agent destinataire (10), on verrouille une sortie (19, 21) d'un agent de transmission (7, 8) sur une entrée (14, 17) de l'agent de transmission (7, 8) de sorte qu'on transmet momentanément uniquement les messages arrivant sur ladite entrée (14,17) de l'agent de transmission (7,8), en provenance d'un agent initiateur (3), à ladite sortie (19,21) de l'agent de transmission (7,8), les autres entrées dudit agent de transmission (7, 8) pouvant transmettre des messages aux autres sorties dudit agent de transmission.

2. Procédé selon la revendication 1, dans lequel une séquence insécable de messages générée par un agent initiateur (3) et destinée à un agent destinataire (10), débute par un message de verrouillage comprenant une adresse identifiant l'agent destinataire, et un code d'opération possédant l'information que la séquence est insécable.

3. Procédé selon la revendication 2, dans lequel ledit code d'opération s'interprétant comme un verrouillage s'interprète en outre comme une commande.

4. Procédé selon la revendication 2 ou 3, dans lequel le message de verrouillage propage, aux agents de transmission successifs (7, 8) entre l'agent initiateur (3) et l'agent destinataire (10), un verrouillage d'une sortie déterminée (14, 17) de chacun desdits agents de transmission successifs (7, 8), sur l'entrée (14, 17) par laquelle est arrivé le message de verrouillage.

5. Procédé selon la revendication 4, dans lequel les messages de ladite séquence insécable de messages suivant le message de verrouillage sont transmis par les agents de transmission successifs (7, 8) par un trajet alors verrouillé, un message provenant d'un autre agent initiateur (1, 2) ne pouvant être intercalé dans ladite séquence insécable de messages.

6. Procédé selon l'une quelconque des revendications 2 à 5, dans lequel ladite séquence insécable de messages se termine par un message de déverrouillage comprenant une adresse identifiant l'agent destinataire (10), et un code d'opération s'interprétant comme un déverrouillage.

7. Procédé selon la revendication 6, dans lequel le message de déverrouillage propage, aux agents de transmission successifs (7, 8) entre l'agent initiateur (3) et l'agent destinataire (10), un déverrouillage des sorties successives verrouillées sur leur entrée respective.

8. Procédé selon la revendication 6 ou 7, dans lequel ledit code d'opération s'interprétant comme un déverrouillage s'interprète en outre comme une commande.

9. Procédé selon l'une quelconque des revendications 2 à 5, dans lequel ledit message de verrouillage comprend en outre le nombre de messages de la séquence insécable de messages.

10. Procédé selon la revendication 1, dans lequel chaque message d'une séquence insécable de messages générée par un agent initiateur (3) et destinée à un agent destinataire (10) comprend une information indiquant s'il est lié de manière insécable avec le message suivant, le premier message de ladite séquence comprenant en outre une adresse identifiant l'agent destinataire.

11. Procédé selon la revendication 1, **caractérisé en ce que** :
on verrouille, sur les agents de transmission successifs (7, 8) entre l'agent initiateur (3) et l'agent destinataire (10), une sortie déterminée (19, 21) de chacun desdits agents de transmission successifs (7, 8), sur l'entrée (14, 17) par laquelle est arrivé le premier message de la séquence insécable comprenant une information indiquant qu'il est lié de manière insécable avec le message suivant ;
on transmet, par le chemin verrouillé, les messages suivants de la séquence insécable ; et
on déverrouille lesdites sorties verrouillées à la transmission du dernier message de la séquence insécable, qui contient une information indiquant qu'il n'est pas lié de manière insécable avec le message suivant.

12. Système de transmission d'une séquence de messages dans un réseau d'interconnexions point à point, ledit système comprenant des agents (1, 2, 3) initiateurs de messages, des agents (9, 10) destinataires de messages, et des agents (7, 8) de transmission de messages, dans lequel un agent de transmission (7, 8) comprend au moins une sortie (18, 19, 24, 21) comprenant un moyen d'autorisation (22, 23,24, 25) apte à verrouiller ladite sortie (19, 21) sur une entrée (14, 17) de l'agent de transmission (7, 8) de sorte qu'on transmet momentanément uniquement les messages arrivant sur ladite entrée (14,17) de l'agent de transmission (7,8), en provenance d'un agent initiateur (3), à ladite sortie (19,21) de l'agent de transmission (7,8), les autres entrées dudit agent de transmission (7, 8) pouvant transmettre des messages aux autres sorties dudit agent de transmission, et à déverrouiller ladite sortie verrouillée.

## Claims

1. Method for transmitting a sequence of messages in a point-to-point interconnection network comprising message initiating agents (1, 2, 3), message destination agents (9, 10) and message transmission agents (7, 8), in which, during a transmission of an indivisible sequence of messages from an initiating agent (3) to a destination agent (10), an output (19, 21) of a message transmission agent (7, 8) is locked onto an input (14, 17) of the transmission agent (7, 8) such that there are transmitted, momentarily, only the messages arriving on the said input (14, 17) of the transmission agent (7, 8), coming from an initiating agent (3), to the said output (19, 21) of the transmission agent (7, 8), the other inputs of the said transmission agent (7, 8) being able to transmit messages to the other outputs of the said transmission agent.

2. Method according to Claim 1, in which an indivisible sequence of messages generated by an initiating agent (3) and destined for a destination agent (10) starts with a locking message comprising an address identifying the destination agent, and an operation code containing the information that the sequence is indivisible.

3. Method according to Claim 2, in which the said operation code being interpreted as a locking is also interpreted as a command.

4. Method according to Claim 2 or 3, in which the locking message propagates, to the successive transmission agents (7, 8) between the initiating agent (3) and the destination agent (10), a locking of a specified output (14, 17) of each of the said successive transmission agents (7, 8) onto the input (14, 17) through which the locking message has arrived.

5. Method according to Claim 4, in which the messages of the said indivisible sequence of messages following the locking message are transmitted by the successive transmission agents (7, 8) through a path that is therefore locked, a message coming from another initiating agent (1, 2) not being able to be interposed in the said indivisible sequence of messages.

6. Method according to any one of Claims 2 to 5, in which the said indivisible sequence of messages is terminated by an unlocking message comprising an address identifying the destination element (10) and an operation code interpreted as an unlocking code.

7. Method according to Claim 6, in which the unlocking message propagates, to the successive transmission agents (7, 8) between the initiating agents (3) and the destination agent (10), an unlocking of the successive outputs locked onto their respective input.

8. Method according to Claim 6 or 7, in which the said operation code interpreted as an unlocking is interpreted as a command.

9. Method according to any one of Claims 2 to 5, in which the said locking message also comprises the number of messages in the indivisible sequence of messages.

10. Method according to Claim 1, in which each message of an indivisible sequence of messages generated by an initiating agent (3) and destined for a destination agent (10) comprises information indicating that it is linked in an indivisible manner with the following message, the first message in the said sequence furthermore comprising an address identifying the destination agent.

11. Method according to Claim 1, **characterized in that**:
there is locked, on the successive transmission agents (7, 8) between the initiating agent (3) and the destination agent (10), a specified output (19, 21) of each of the said successive transmission agents (7, 8) onto the input (14, 17) through which has arrived the first message of the indivisible sequence comprising information that it is linked in an indivisible manner with the following message;
the following messages of the indivisible sequence are transmitted, through the locked path; and
the said locked outputs are unlocked on transmission of the last message of the indivisible sequence, which contains information indicating that it is not linked in an indivisible manner with the following message.

12. System for transmitting a sequence of messages in a point-to-point interconnection network, the said system comprising message initiating agents (1, 2, 3), message destination agents (9, 10) and message transmission agents (7, 8), **characterized in that** it comprises a transmission agent (7, 8) comprising at least one output (18, 19, 20, 21) comprising a means of authorization (22, 23, 24, 25) capable of locking the said output (19, 21) onto an input (14, 17) of the transmission agent (7, 8) such that there are transmitted, momentarily, only the messages arriving on the said input (14, 17) of the transmission agent (7, 8), coming from an initiating agent (3), to the said output (19, 21) of the transmission agent (7, 8), the other inputs of the said transmission agent (7, 8) being able to transmit messages to the other outputs of the said transmission agent, and to unlock the said locked output.

## Patentansprüche

1. Verfahren zur Übertragung einer Folge von Nachrichten in einem Punkt-zu-Punkt-Verbindungsnetz mit Nachrichteninitiatoragenten (1, 2, 3), Nachrichtenempfängeragenten (9, 10) und Nachrichtenübertragungsagenten (7, 8), wobei bei einer Übertragung einer unteilbaren Folge von Nachrichten von einem Initiatoragenten (3) zu einem Empfängeragenten (10) ein Ausgang (19, 21) eines Übertragungsagenten (7, 8) mit einem Eingang (14, 17) des Übertragungsagenten (7, 8) verriegelt wird, so dass nur die Nachrichten, die am Eingang (14, 17) des Übertragungsagenten (7, 8) ankommen und die von einem Initiatoragenten (3) stammen, momentan zum Ausgang (19, 21) des Übertragungsagenten (7, 8) übertragen werden, während die anderen Eingänge des Übertragungsagenten (7, 8) Nachrichten zu den anderen Ausgängen des Übertragungsagenten übertragen können.

2. Verfahren nach Anspruch 1, wobei eine unteilbare Folge von Nachrichten, die von einem Initiatoragenten (3) erzeugt wird und für einen Empfängeragenten (10) bestimmt ist, mit einer Verriegelungsnachricht mit einer Adresse, die den Empfängeragenten identifiziert, und einem Operationscode, der die Information besitzt, dass die Folge unteilbar ist, beginnt.

3. Verfahren nach Anspruch 2, wobei der Operationscode, der als Verriegelung interpretiert wird, außerdem als Befehl interpretiert wird.

4. Verfahren nach Anspruch 2 oder 3, wobei die Verriegelungsnachricht zu den aufeinander folgenden Übertragungsagenten (7, 8) zwischen dem Initiatoragenten (3) und dem Empfängeragenten (10) eine Verriegelung eines bestimmten Ausgangs (14, 17) jedes der aufeinander folgenden Übertragungsagenten (7, 8) mit dem Eingang (14, 17), an dem die Verriegelungsnachricht angekommen ist, verbreitet.

5. Verfahren nach Anspruch 4, wobei die Nachrichten der unteilbaren Folge von Nachrichten nach der Verriegelungsnachricht durch die aufeinander folgenden Übertragungsagenten (7, 8) über einen nun verriegelten Weg übertragen werden, wobei eine Nachricht, die von einem anderen Initiatoragenten (1, 2) stammt, nicht in die unteilbare Folge von Nachrichten eingefügt werden kann.

6. Verfahren nach einem der Ansprüche 2 bis 5, wobei die unteilbare Folge von Nachrichten mit einer Entriegelungsnachricht mit einer Adresse, die den Empfängeragenten (10) identifiziert, und einem Operationscode, der als Entriegelung interpretiert wird, endet.

7. Verfahren nach Anspruch 6, wobei die Entriegelungsnachricht zu den aufeinander folgenden Übertragungsagenten (7, 8) zwischen dem Initiatoragenten (3) und dem Empfängeragenten (10) eine Entriegelung der aufeinander folgenden mit ihrem jeweiligen Eingang verriegelten Ausgänge verbreitet.

8. Verfahren nach Anspruch 6 oder 7, wobei der Operationscode, der als Entriegelung interpretiert wird, außerdem als Befehl interpretiert wird.

9. Verfahren nach einem der Ansprüche 2 bis 5, wobei die Verriegelungsnachricht außerdem die Anzahl von Nachrichten der unteilbaren Folge von Nachrichten aufweist.

10. Verfahren nach Anspruch 1, wobei jede Nachricht einer unteilbaren Folge von Nachrichten, die durch einen Initiatoragenten (3) erzeugt wird und für einen Empfängeragenten (10) bestimmt ist, eine Information aufweist, die angibt, ob sie in unteilbarer Weise mit der folgenden Nachricht verbunden ist, wobei die erste Nachricht der Folge außerdem eine Adresse aufweist, die den Empfängeragenten identifiziert.

11. Verfahren nach Anspruch 1, **dadurch gekennzeichnet, dass**:
an den aufeinander folgenden Übertragungsagenten (7, 8) zwischen dem Initiatoragenten (3) und dem Empfängeragenten (10) ein bestimmter Ausgang (19, 21) von jedem der aufeinander folgenden Übertragungsagenten (7, 8) mit dem Eingang (14, 17), an dem die erste Nachricht der unteilbaren Folge mit einer Information, die angibt, dass sie in unteilbarer Weise mit der folgenden Nachricht verbunden ist, angekommen ist, verriegelt wird;
über den verriegelten Weg die folgenden Nachrichten der unteilbaren Folge übertragen werden; und
die verriegelten Ausgänge bei der Übertragung der letzten Nachricht der unteilbaren Folge entriegelt werden, die eine Information enthält, die angibt, dass sie nicht in unteilbarer Weise mit der folgenden Nachricht verbunden ist.

12. System zur Übertragung einer Folge von Nachrichten in einem Punkt-zu-Punkt-Verbindungsnetz, wobei das System Nachrichteninitiatoragenten (1, 2, 3), Nachrichtenempfängeragenten (9, 10) und Nachrichtenübertragungsagenten (7, 8) aufweist, **dadurch gekennzeichnet dass** das System ein Übertragungsagent (7, 8) aufweist mit mindestens einem Ausgang (18, 19, 20, 21) mit einem Autorisierungsmittel (22, 23, 24, 25), das den Ausgang (19, 21) mit einem Eingang (14, 17) des Übertragungsagenten (7, 8) verriegeln kann, so dass momentan nur die Nachrichten, die an dem Eingang (14, 17) des Übertragungsagenten (7, 8) ankommen und die von einem Initiatoragenten (3) stammen, zu dem Ausgang (19, 21) des Übertragungsagenten (7, 8) übertragen werden, wobei die anderen Eingänge des Übertragungsagenten (7, 8) Nachrichten zu den anderen Ausgängen des Übertragungsagenten übertragen können, und den verriegelten Ausgang entriegeln kann.
